# EUROPEAN PATENT APPLICATION

(11) **EP 4 838 419 A1**
(43) Date of publication of application: **11.11.2026**
(21) Application number: 26176971.5
(22) Date of filing: 06.05.2026
(51) Int. Cl.: G06N 3/082, G06F 9/54, G06N 3/098, G06N 7/04, G06N 20/00

(54) **ARTIFICIAL INTELLIGENCE DISTRIBUTED IN A COMPUTER NETWORK AND RELATED CONTROL METHOD**

(30) Priority: 07.05.2025 IT 202500010176
(71) Applicant: Bitcorp S.r.l., 20149 Milano (IT)
(72) Inventor: PEGORARO, Gabriele Edmondo, Milano (IT); PATRUNO, Giovanni, Milano (IT)
(74) Representative: Caruti, Filippo

(57) **Abstract**

The present invention relates to a distributed computer network (1) comprising a plurality of network nodes (10; 10A-D) connected to each other to exchange data. Each node executing a respective version of the same artificial intelligence model (40; 40A-D). In detail, each network node acquires a set of input data; determines at least one value of a relevant characteristic or, feature, as a function of the input data set; generates a set of output data as a function of the input data by means of the artificial intelligence model. Furthermore, the network node is adapted to selectively modify at least one weight of the artificial intelligence model as a function of the input data set and the output data set. Advantageously, each network node checks whether the change of the at least one weight corresponds to a predetermined update condition and, in the affirmative case, generates and transmits to the other network nodes an update message comprising at least a value indicative of an update to be applied to the at least one weight. In addition, each network node, upon receiving an update message, modifies at least one weight of its version of the artificial intelligence model as a function of the indicative value of an update to be applied to the at least one weight included in each update message received. In addition, each node generates the output data set by processing the input data by means of the updated artificial intelligence model.

## Description

### TECHNICAL FIELD

The present invention refers to the field of artificial intelligence. In particular, the present invention relates to an artificial intelligence, preferably based on a neural network, distributed among the nodes of a computer network.

### STATE OF THE ART

The integration of artificial intelligence in computer networks has seen rapid diffusion and is one of the areas of development of greatest interest for the IT and electronic sectors.

In particular, software, firmware and/or hardware based on, or specializing in the execution of, algorithms and/or artificial intelligence models are used in the context of computer networks to fully or partially automate the management of data traffic, the security and reliability of the data exchanged, the analysis and/or processing of the data itself (in particular in the case of massive amounts of data - the so-called Big Data), incident analysis (post-incident forensic). Artificial intelligence has been applied to computer networks comprising heterogeneous electronic devices, for example user devices - smartphones, tablets, personal computers, etc. - processing devices - servers, mainframes, etc. - network devices - modems, switches, routers, firewalls, etc. - devices of the Internet of Things (IoT) type - smart meters, smart appliances, etc.

In this case, artificial intelligence consists of a software/firmware application operating on a management node (e.g., a server, etc.) or control node (e.g., a modem, a firewall, etc.) of the network adapted to autonomously analyse a flow of data entering and/or exiting the management/control node in order to identify an event of interest (e.g., the reception of spam emails, the transfer of a file containing a computer virus, a change in the privileges of a user of the computer network, etc.). For this purpose, it is known to use artificial intelligence software/firmware applications based on Bayesian modules for probabilistic classification (MBRA, for example described in https://www.bayesserver.com/docs/techniques/prediction), deep neural networks for supervised learning (MRNP), or *Deep Neural Network* (DNN), quantum hybrid sensors for non-classical pattern detection (QSHM), whose application to cybersecurity is currently the subject of experimental research and in early development, hybrid decision engines for multi-model integration (HDM, described in de Vos et al.: "Hybrid Decision Making for Scalable Multi-Agent Navigation: Integrating Semantic Maps, Discrete Coordination, and Predictive Control Model", 2024 arXiv:2410.12651), and evolutionary modules for adaptive parameter updating (EAM).

US 2022/294848 describes a computer system in accordance with the preamble to claim 1.

However, the automated management/control offered by the known solutions has limited effectiveness and requires increasing hardware resources as the complexity of the computer network grows. Therefore, the need to integrate artificial intelligence in a more functional and scalable way due to the size of the computer network of interest is felt in the industry.

### OBJECTS AND SUMMARY OF THE INVENTION

An object of the present invention is to overcome the drawbacks of the prior art.

In particular, it is an object of the present invention to comprise a method and a system adapted to integrate an artificial intelligence into a distributed computer network comprising a plurality of network nodes.

A further object of the present invention is to propose a method and a system adapted to implement a neural network in each node of the computer network and maintain a predetermined degree of coherence among the neural networks of the network.

A further object of the present invention is to present a method and a system adapted to update a plurality of neural network instances, or more simply neural networks, running on a corresponding plurality of nodes of a peer-to-peer (P2P) network.

These and other objects of the present invention are achieved by means of a system incorporating the features of the annexed claims, which form an integral part of the present description.

According to a first aspect, the present invention relates to a distributed computer network comprising a plurality of network nodes connected to each other to exchange data. Each node executing a respective version of the same artificial intelligence model. In detail, each network node acquires a set of input data; determines at least one value of a relevant characteristic or, feature, as a function of the input data set; generates a set of output data as a function of the input data by means of the artificial intelligence model. Furthermore, the network node is adapted to selectively modify at least one weight of the artificial intelligence model as a function of the input data set and the output data set. Advantageously, each network node checks whether the change of the at least one weight corresponds to a predetermined update condition and, in the affirmative case, generates and transmits to the other network nodes an update message comprising at least a value indicative of an update to be applied to the at least one weight. In addition, each network node, upon receiving an update message, modifies at least one weight of its version of the artificial intelligence model as a function of the indicative value of an update to be applied to the at least one weight included in each update message received. Furthermore, each node generates the output data set by processing the input data by means of the updated artificial intelligence model, so that the network nodes generate coherent output data sets in the entire distributed computer network.

The computer network according to the present invention allows on the one hand to keep up-to-date the artificial intelligence models, for example a neural network, instantiated within each node based on local inputs and outputs generated locally by each node, but at the same time allows to keep consistent the different neural network instances implemented by the nodes of the computer network. Consequently, it is possible to guarantee a correct evolution of the artificial intelligence models instantiated in the computer network, guaranteeing a minimum level of consistency between the models and therefore uniformity of the outputs generated by these models.

In other words, the versions of the artificial intelligence model running on the nodes of the network are jointly updated so as to consistently process the data.

In an exemplary embodiment, the network nodes operate in a peer-to-peer (P2P) mode and implement a neural network (NN). Advantageously, the network nodes are configured to:
1. Adapt their operation to input signals locally by means of an updating rule, preferably based on the normalized Hebb learning rule and, even more preferably, comprising pruning and dynamic growth mechanisms - which allow to dynamically modify their structure and synaptic weights as a function of local input signals and normalized Hebbian learning rules;
2. classify normal, anomalous or dangerous events, at the same time performing pruning and automatic topological growth of the neural network based on co-activation criteria and relevance thresholds.
3. selectively synchronize with other nodes of the network by at least partial sharing of relevant weights, anomalies or topologies, that is, to perform partial synchronization through broadcast, voting or federated learning of selected parameters of the neural network.

Thanks to the computer network according to the embodiment, each NN implemented by a respective network node evolves - i.e., modifies the weights, adds or removes links between neurons - as a function of the local inputs and, at the same time, "synchronizes", that is, guarantees a desired level of correspondence (e.g., equivalence, proportionality, etc.) of the values of at least a subset of weights of the NNs of the network nodes to guarantee a uniform reaction of the network nodes to a given event, that is, a set of input signals.

In one embodiment, each node updates a weight by calculating an activation value of neurons of the neural network: ${y}_{o} \left(t\right) = f \left(\sum {w}_{io} \left(t\right) ⋅ {x}_{i} \left(t\right)\right) ,$ where yₒ(t) is the activation value of an output neuron or, *xᵢ* is an input value of an i-th input neuron connected to the output neuron or *wᵢₒ* is the weight linking input and output neurons, and f(·) represents an activation function, preferably a ReLU or Sigmoid function.

Preferably, each node calculates an update value of a corresponding weight *wᵢₒ(t)* ${Δw}_{io} \left(t\right) = η ⋅ \left({x}_{i}\left(t\right)⋅{y}_{o}\left(t\right)-λ⋅{w}_{io}\left(t\right)\right) ,$ where *η* is a learning rate, *λ* is a decay rate of the neural network. In this case, each update value is added to a corresponding weight of the neural network.

In one embodiment, the network mode removes a link between two neurons of the neural network if the value of a respective updated weight is lower than a predetermined threshold value, and wherein a new link between two neurons of the neural network is added if the value of a new weight is higher than the predetermined threshold value.

In one embodiment, each network node transmits to any other node of the computer network the updated value of at least one weight of the neural network calculated by the network node itself. Preferably, each network node modifies at least a corresponding weight of the respective neural network based on a linear combination - for example an average or a weighted average - of the weight values calculated by the neural network and received by the other nodes of the computer network.

In one embodiment, each network node transmits to any other node of the computer network a difference value between a value of at least one weight and a corresponding updated value of the same weight of the neural network calculated by the network node itself. Preferably, each network node modifies at least a corresponding weight of the respective neural network based on a linear combination - for example an average or a weighted average - of the difference values calculated by the neural network and received by the other nodes of the computer network.

In one embodiment, each network node selects the at least one weight of which to transmit the updated value or the change value of a weight if the updated value or the change value of a weight exceeds a respective sharing threshold value.

In one embodiment, each network node signals the identification of an anomaly to the other network nodes. Furthermore, if a predetermined number of nodes identifies the same anomaly, each network node that has identified the anomaly transmits to any other node of the computer network the value of at least one updated weight of the neural network associated with the anomaly. Preferably, each network node modifies at least one corresponding weight of the respective neural network based on a linear combination - for example an average or a weighted average - of the values of the at least one weight received by the nodes of the computer network that has detected the anomaly.

In one embodiment, the input data set comprises one or more between:
unique identifiers (UIDs),
timestamps,
log,
data destination ports,
IP addresses,
protocols used,
bytes sent/received,
samples or copies of one or more exchanged data packets;
messages generated by any control software running on each node, and
values detected by sensors, transducers or detectors comprised on each node.

A different aspect of the present invention relates to a method of managing instances of artificial intelligence model running on respective network nodes of a distributed computer network. The computer network comprises a plurality of network nodes connected to each other to exchange data. The method comprises that each network node performs the steps of:
acquiring a set of input data;
determining at least one value of a relevant characteristic or, feature, as a function of the input data set;
generating a set of output data as a function of the input data by means of the artificial intelligence model, and
selectively modifying at least one weight of the artificial intelligence model as a function of the input data set and the output data set.

Advantageously, the method comprises that each network node performs the steps of: checking whether the change of the at least one weight corresponds to a predetermined update condition, and
in the affirmative case, generating an update message comprising at least one value indicative of an update to be applied to the at least one weight,
transmitting the update message to the remaining nodes of the network.

Finally, each network node, upon receiving an update message, performs the step of modifying at least one weight of its version of the artificial intelligence model as a function of the indicative value of an update to be applied to the at least one weight included in each update message received.

The method according to the present invention allows to obtain the same advantages set forth above in relation to the computer network according to any one of the preceding embodiments.

Further features and purposes of the present invention will become more evident from the description below.

### BRIEF DESCRIPTION OF THE DRAWINGS

The invention will be described below with reference to some examples, comprised for explanatory and non-limiting purposes, and illustrated in the annexed drawings. These drawings illustrate different aspects and embodiments of the present invention and reference numerals illustrating structures, components, materials and/or similar elements in different drawings are indicated by similar reference numerals, where appropriate.
Figure 1 is a block diagram of a computer network portion according to an embodiment of the present invention;
Figure 2 is a block diagram of a generic network node of the computer network of Figure 1;
Figure 3 is a flowchart of an adaptive control method for data flow according to an embodiment of the present invention;
Figure 4 is a flowchart of a local update method according to an embodiment of the present invention, and
Figure 5 is a flowchart of a synchronisation method in accordance with an embodiment of the present invention.

### DETAILED DESCRIPTION OF THE INVENTION

Some preferred embodiments will be described in detail below, although the invention is susceptible to various alternative modifications. It must in any case be understood that there is no intention to limit the invention to the specific embodiment illustrated, but, on the contrary, the invention intends covering all the modifications and/or the use of equivalent elements or steps falling within the scope of the invention as defined in the claims.

Unless otherwise defined, all the terms of the art, notations and other scientific terms used herein are intended to have the meanings commonly understood by those skilled in the art to which this description belongs. In some instances, terms with commonly understood meanings are defined herein for clarity and/or ready reference; the inclusion of such definitions in the present disclosure is therefore not to be construed as representing a substantial difference from what is generally understood in the art.

The terms "comprising", "having", "including" and "containing" are to be understood as openended terms (i.e. the meaning of "comprising, but not limited to") and are to be considered as a support also for terms such as "essentially consist of", "essentially consisting of", "to consist of" or "consisting of".

The use of "for example", "etc.", "or" indicates non-exclusive alternatives without limitation, unless otherwise indicated. The use of "includes" means "includes, but not limited to" unless otherwise indicated.

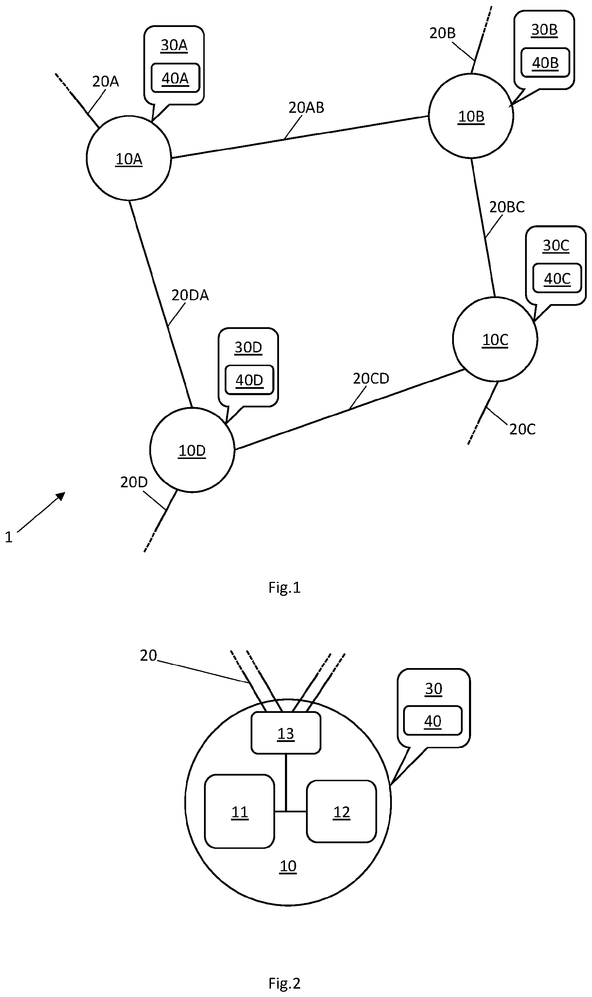

Referring to Figure 1, a computer network 1 according to an embodiment of the present invention comprises a plurality of network nodes, or more simply nodes 10A, 10B, 10C, 10D. In particular, Figure 1 schematically illustrates a portion of the computer network 1 comprising four exemplary nodes 10A-D. Each node 10A-D is connected, or is adapted to establish a connection, to at least one other node 10A-D of the computer network 1 by means of a communication channel. In the example of Figure 1, the communication channels 20AB, 20BC, 20CD, 20DA connect the nodes 10A-D to each other, while the communication channels 20A-D connect the nodes 10A-D to other nodes of the computer network (not illustrated). The generic communication channel 20AB-DA, 20A-D - also indicated for the sake of simplicity with the reference "20" below - allows an exchange of information between the nodes 10A-D of the computer network 1, preferably in the form of data packets (encoded in standard data packets according to IP, UDP, TCP or equivalent protocols such as the TEP protocol covered by the Applicant's patent). In a preferred embodiment, the computer network 1 is of the "Peer-to-Peer" (P2P) type. In other words, the nodes 10A-10D are adapted to exchange information with each other without the control or coordination of a master node or other management element.

The generic node 10A-D - illustrated in Figure 2 where it is indicated for the sake of simplicity with the reference "10"- is an electronic device comprising a processing unit 11 (e.g., comprising one or more of a processor, a microprocessor, a microcontroller, an ASIC, an FPGA, a DSP, a GPE, etc.), a memory unit 12 (preferably, comprising one or more volatile elements - e.g., RAM - and non-volatile elements - e.g., ROM) and a communication unit 13 (e.g., a modem). The processing unit 11 is connected to the other units to control the operation thereof, preferably based on instructions and/or procedures stored in the memory unit 12. The communication unit 13 has the purpose of managing the transmission and reception of information through the communication channels 20 established by the generic node 10 with another node of the computer network 1. As will be apparent to the person skilled in the art, the generic node 10 may comprise one or more additional units (not illustrated for the sake of simplicity); for example, the generic node 10 comprises a power supply unit (not illustrated) adapted to supply electricity to the other units of the generic node 10. Non-limiting examples of a network node 10 according to the present invention comprise user terminals or devices - e.g., a personal computer, a smartphone, a tablet, etc. -, network or communication devices - e.g., modems, switches, routers, firewalls, etc. -, computing devices - e.g., servers, etc. - "smart" electronic devices (i.e., adapted to operate autonomously or semi-autonomously) and/or falling into the so-called Internet of Things (IoT) category - e.g., smart TVs, smart speakers, smart thermostats, smart cameras, etc.).

In the embodiments of the present invention, a plurality of nodes 10, preferably all of them, of the computer network 1 executes a respective instance of a software application 30 based on artificial intelligence. In the example of Figure 1, each of the nodes 10A-D executes a respective instance 30A-D of the software application 30. In the exemplary case considered, the software application 30 comprises a Neural Network (NN) model 40, properly trained and validated on a balanced ground truth dataset containing both true positive (True Positive: actually anomalous events) and true negative (True Negative: Effectively non-anomalous events) - i.e., each instance 30A-D of the software application 30 comprises its own NN 40A-D. In a non-limiting way, the software application 30 is adapted to identify - i.e., classify - information and/or simple data packets comprising anomalies, with respect to an expected format/content, or comprising harmful or potentially harmful information - e.g., a malicious code or portions of code, such as malware, and/or erroneous commands.

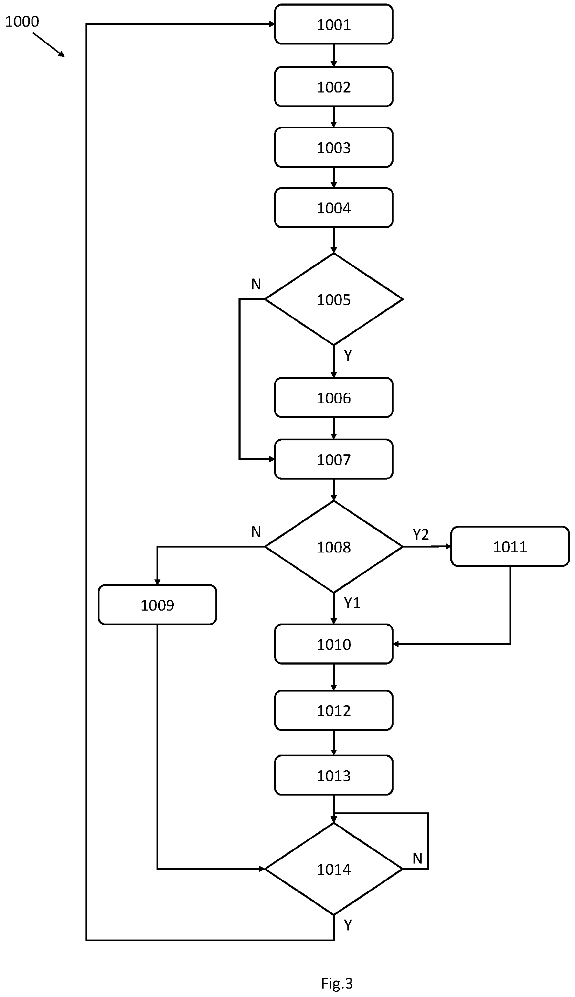

The instance of the software application 30 running on the generic node 10 of the network executes an adaptive information flow control method 1000 according to an embodiment of the present invention, of which Figure 3 is a flowchart.

In detail, the method 1000 comprises, in an initial phase (step 1001), for the acquisition of one or more input signals, also called stimuli. The input signals comprise, in a non-limiting way, transactional data - such as unique identifiers (UIDs), timestamps, logs (i.e., registers) stored by the node 10 - such as registers containing requests and responses received from other nodes of the computer network 1 -, data destination ports and IP addresses, protocols used, bytes sent/received, etc. - samples or entire copies of one or more exchanged data packets; alerts and other messages generated by any antivirus software, firewalls etc. running on the node 10; values detected by sensors, transducers or detectors included in the node 10 (in particular, in the devices belonging to the Internet of Things - loT category).

The input signals are processed to extract a plurality of values of corresponding characteristics, or features, (step 1002). Examples of features comprise, in a non-limiting way, the rate of requests over a certain time interval, the distribution of communication between addresses and ports detected in the network, the distribution of the TCP/IP flags used during communication, the volume of data over time. Preferably, a preliminary analysis of the feature values extracted from the input signals is performed (step 1003). Advantageously, although not in a limiting way, the preliminary analysis involves performing operation of cleaning outliers, of smoothing some features. Subsequently, an operation of recognition of one or more predetermined patterns is carried out (i.e., pattern recognition; step 1004), which comprise for identifying trends in the values of one or more features that are considered relevant or non-relevant (e.g., to be ignored) for the processing performed by the NN 40.

In the embodiments of the present invention, the method 1000 comprises performing a dynamic synaptic adaptation (decision step 1005). In short, this step modifies the model of the NN 40 as a function of the values of the extracted features and/or the patterns identified. In other words, the dynamic synaptic adaptation allows the NN 40 to adapt as a function of new input signals and/or trends thereof as described below.

In case the dynamic synaptic adaptation detects the need to modify the NN 40 (output branch Y of step 1005), the NN 40 of the generic node 10 is modified accordingly (step 1006) - for example, the value of one or more selected weights is updated, one or more branches of the NN 40 are eliminated (pruning) and/or the NN 40 is increased in size (growth) by adding new connections between the artificial neurons. After this update of the NN 40, or on the contrary, if the dynamic synaptic adaptation does not detect the need to modify the NN 40 (output branch N of step 1005), it is comprised to process the received features to distinguish between normal events, anomalous events and security threats by means of the NN 40 (step 1007).

As a function of the events identified, the method 1000 comprises performing an appropriate reaction operation (decision step 1008). For example, in the case of normal events (output branch N of step 1008) no action is taken (step 1009). Otherwise, in the case of anomalous events (output branch Y1 of step 1008) it is comprised to generate an alert report to be transmitted to one or more human or artificial users (step 1010) and in the case of threats (output branch Y2 of step 1008) it is comprised to block the distribution of information comprising such threats (step 1011) in addition to generating the alert report.

Eventually, the method 1000 comprises generating (1012) a report or a warning message in case one or more anomalous events/threats are identified and transmitting (step 1013) to the other nodes of the computer network 1, to a user terminal and/or to a network node with global anomaly logging functions.

Method 1000 is cyclically reiterated as a function of a reiteration condition (decision step 1014). For example, the reiteration condition comprises one or more of waiting for a delay time between the end of a cycle of the method 1000 and the next one, and arrival/generation of a new set of input signals at the node 10.

In a preferred embodiment, the method 1000 executes an adaptive processing synaptic engine, also referred to as an "engine" for the sake of simplicity, which controls a dynamic evolution of a topology of the NN 40 based on co-activations of neurons, by applying a normalized Hebb-type learning rule. The engine is based on the Hebb learning rule defined in the document Hebb, D.O.: "The Organization of Behavior: A Neuropsychological Theory", 1949 Wiley. Advantageously, a change *ΔWᵢₒ* of a weight *Wᵢₒ* is evaluated based on a "general updating formula" borrowed from Hebb's neurobiological theories: ${ΔW}_{io} = η ⋅ {x}_{i} ⋅ {y}_{o} ,$ (1)

Where *ΔWᵢₒ* is a change of a weight *W* of the synaptic connection between an input neuron "i" and output neuron "o" of two adjacent levels of the NN, *η* is a learning rate (0 < η << 1), *xᵢ* activation value of the input neuron, *yₒ* activation value of the output neuron. In particular, the value of the weight *W* increases - i.e., the change *ΔWᵢₒ* increases - when both the activation values of the corresponding input and output neurons are both greater than zero (concordant values). Conversely, the weight value *W* is reduced when the activation values of the input and output neurons are active at different times or are discordant with each other. In other words, a weight *W* is strengthened when the input and output neurons referred to it are activated at the same instant of time or, at least, are active during time intervals at least partially overlapping each other. In other words, the use of formula (1) allows to obtain a Long-Term Potentiation (LTP), of the synaptic efficacy due to the synchronized stimulation of the input and output neurons associated with the weight *W* considered.

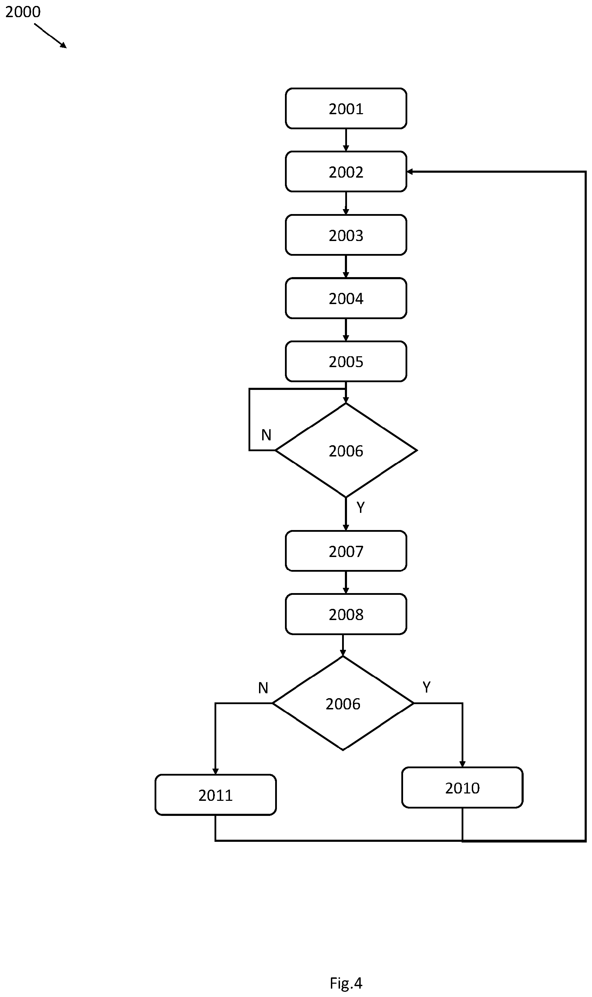

Preferably, in accordance with the synaptic learning model proposed by Oja, E. ("Simplified neuron model as a principal component analyzer", Journal of Mathematical Biology, 1982), formula (1) is reworked in order to limit the unlimited growth of the synaptic weights, by introducing a normalization term. In particular, the change of the weight Wᵢₒ is expressed as: ${ΔW}_{io} = η ⋅ \left({x}_{i}⋅{y}_{o}-{y}_{o}^{2}⋅{W}_{io}\right) .$ (2) where η represents the learning rate, xᵢ the activation of the input neuron (where X - uppercase - is the input vector), yₒ the activation of the output neuron (where y - lowercase - is the output of the neuron), and Wᵢₒ the current weight of the synaptic connection. By way of example, the engine operates according to a local update method 2000, illustrated in the flowchart of Figure 4. In an initial phase (step 2001), the method comprises the definition of the following elements:
X = {x₁, x₂, ..., xₙ} with n positive integer, representing the input vectors (e.g. data from sensors, computer networks, IoT devices);
Y = {y₁, y₂, ..., yₘ} output vectors (e.g., anomaly predictions), and
W = [wᵢₒ]: matrix of the synaptic weights associated with connections between the input neurons i and the output neurons o.

In addition, this formula maintains the direction of the Hebbian learning, normalizes the weights (avoids divergence) and is consistent with the *Principal Component Analysis* (PCA) - or PCA-like behavior demonstrated by Oja.

During the operation of the neural network 40, the engine, iteratively and with a time interval t, increments an internal counter (step 2002) and processes each pair of input-output neurons activated in the network (step 2003). In particular, for each output neuron o, an activation value yₒ(t) is calculated, given by: ${y}_{o} \left(t\right) = f \left(\sum {w}_{io} \left(t\right) ⋅ {x}_{i} \left(t\right)\right) ,$ (3) where f(·) represents an activation function - such as for example ReLU or Sigmoid -, *xᵢ* the input value of the i-th input neuron, *wᵢₒ* the weight between input and output neuron.

Accordingly, the engine calculates an update value of the corresponding weight *wᵢₒ(t)* 2004): ${Δw}_{io} \left(t\right) = η ⋅ \left({x}_{i}\left(t\right)⋅{y}_{o}\left(t\right)-λ⋅{w}_{io}\left(t\right)\right) ,$ (4) where *η* is a learning rate, *λ* is a decay rate (normalization).

The weight *wᵢₒ(t) Δwᵢₒ(t)* will be apparent to the skilled person the steps 2003-2005 just described make it possible to identify new weights generated by the NN 40 - for example, additional to an initial set of weights or comprised by a previously discarded or pruned data set.

The engine checks the number of counted time periods (decision step 2006 and branch N thereof) and, when a predetermined number N of time periods t have elapsed (output branch Y of step 2006), the count is reset (step 2007) and a normalization operation of the weights *wᵢₒ* is performed to prevent the latter from diverging (step 2008): ${w}_{io} \left(t+1\right) = {w}_{io} \left(t\right) + {Δw}_{io} \left(t\right) / {\left‖W\left(t\right)+ΔW\left(t\right)\right‖}_{2}$ (5) where ∥∥₂ is a vector norm (or modulus of the vector as the norm L₂, i.e. the measure of the length of the Euclidean standard distance between two points in the standard space named L₂, where the coordinates of each point are scalar quantities, real numbers, within a vector representation).

Preferably, the engine performs a check of topological adaptation of the weights (decision step 2009). For example, the engine checks whether each weight - or at least each updated weight in the current time period t - is lower than a minimum threshold value - i.e., *wᵢₒ* < ϑ. If the weight is lower than the minimum threshold value (output branch Y of step 2009), a pruning is performed (step 2010), that is, a weight elimination, which represents a minor relationship. Conversely, if the weight is higher than the minimum threshold value (output branch N of step 2009), the weight is maintained (step 2011). In this way, each node 10 of the network 1 is able to dynamically adapt its instance of the NN 40 in response to the evolution of the input information acquired.

The method 2000 is thus reiterated by step 2002 in the next time period t.

Below is an example of a pseudo-code that implements the methods 1000 and 2000.

| | | | | |
|---|---|---|---|---|
| Initialize: | | | | |
| | W ← small random values | | # If it was started from zero or too large weights, the network | |
| | | | # would risk of not learning or diverging. | |
| | | | # Small values allow natural growth | |
| | | | # through "Hebbian" learning. | |
| | threshold θ, learning rate η, decay λ | | | |
| | normalization interval N | | | |
| iterate for each time period t: | | | | |
| | Input X(t) ← acquire data | | | |
| | Output Y(t) ← calculate activation: Y = f(W^T· X) | | | # WT X → weighed product of the |
| | | | | # input data with weights. |
| | | | | # f(.)→ e.g.: ReLU, Sigmoid, etc. |
| | For each pair (i,j): | | | |
| | | Δwᵢₒ = η · (Xᵢ · Yₒ - λ · Wᵢₒ) | | |
| | | Wᵢₒ += Δwᵢₒ | | |
| | if t mod N == 0: | | | |
| | | normalize W: | | |
| | | | W=W/∥W∥₂ | |
| | Pruning and growth: | | | |
| | | For each Wᵢₒ: | | |
| | | | if \|Wᵢₒ\| < θ: | |
| | | | | set Wᵢₒ = 0 |
| | | create a new connection if a new co-activation is detected with if \|Wᵢₒ\| > θ | | |
| | Prediction: | | | |
| | | Detect anomalies/threats as a function of Y(t) | | |
| | | Generate and transmit message/reports for anomalies/threats detected. | | |
| | Feedback: | | | |
| | | Update W as a function of prediction success failure | | |
| | # Preferably, the values of the weights are modified as a function of a feedback that | | | |
| | # indicates the success or failure of the prediction based on such weights. | | | |
| Repeat | | | | |

As will be apparent to the skilled person, the instances of the NNs 40A-D running on the nodes 10A-D are free to evolve independently of each other, leading to obtaining NNs 40A-D different from each other according to the inputs received over time from each of the NNs 40A-D.

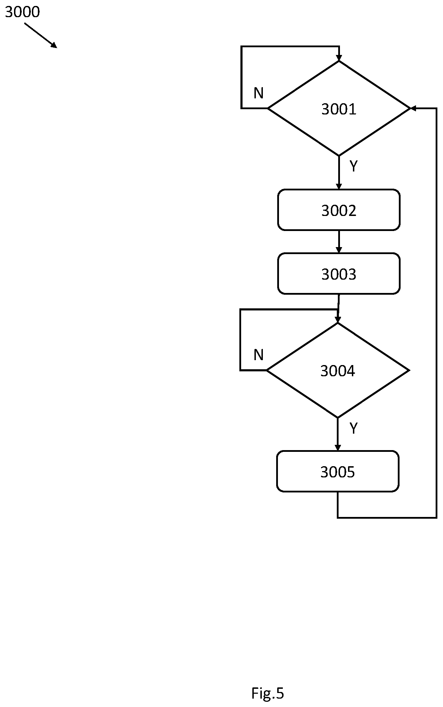

Therefore, in a preferred embodiment of the present invention, the plurality of nodes 10A-D of the computer network 1 executes a synchronization method 3000, of which Figure 5 is a flowchart, which guarantees a minimum degree of uniformity between the instances 40A-D running on the nodes 10A-D of the computer network 1.

In short, the method comprises that the nodes 10A-D update each other to remain coordinated. In particular, the instances of the NNs 40A-D are kept "consistent" or "aligned" with regards to a set of critical information, particularly activation of neuron pairs, while leaving a local freedom on the specific value of one or more weights not associated with critical activations.

To this end, the nodes 10A-D share one or more of the following information:
- new anomalies/threats identified (previously unidentified),
- relevant changes to the weights, and
- new connections that improve security,

In a non-limiting way, the method 3000 comprises implementing synchronization operations between the instances of the NNs 40A-D of the nodes 10A-D by exploiting the P2P structure of the computer network 1 by means of one of the following techniques:
- Broadcast: a set of updated weight values is transmitted from each node 10A-D to all the other nodes 10D-A of the computer network; preferably, weight values exceeding a sharing threshold value are transmitted; consequently, the final weights of the NNs 40A-D are calculated also considering shared updated weight sets - for example, the updated weight value is determined by a linear combination (e.g., an average or a weighted average) of the values received and the locally calculated value of the same weight;
- Voting: voting on the detected anomalies; each network node communicates detected anomalies as described above and if at least a predetermined number (e.g., 50%) of the network nodes detects a same anomaly (i.e., the same message/alert is generated) the values of the weights associated with this anomaly are shared by the network nodes 10A-D that have detected the anomaly to the other nodes to be integrated into the respective NNs 40A-D - e.g., again by means of a linear combination of the same, and
- Federated learning: each node locally updates the respective NN 40A-D and transmits to the other nodes the change applied to each weight, the final weights are calculated considering all the shared changes - for example, the updated weight value is determined by a linear combination (e.g., an average or a weighted average) of the change values received and the locally calculated change value of the same weight.

An example of the synchronization method 3000 implemented by the software application 10A as a function of the node 10A comprises, downstream of the analysis of the local inputs and the update of the weights of the NN 40A by means of the methods 1000 and 2000 described above, to verify whether one or more of the modified weights exceed the sharing threshold (decision step 3001). In the affirmative case (output branch Y of step 3001), the method 3000 comprises to generate (step 3002) and send (step 3003) a message comprising the change *Δwᵢⱼ(t)* weight *wᵢⱼ(t)* network 1.

In series or in parallel, the method 3000 comprises that the node 10A listens for a message comprising the changes of one or more weights with a value greater than the sharing threshold value determined by the remaining nodes 10B-D (decision step 3004), which operate in accordance with steps 3001-3003 just described.

When at least one message is received from another node 10B-D, the method 3000 comprises performing an adaptive fusion of the weights (step 3005) according to the methods comprised by the techniques above - i.e., broadcast, voting and federated learning. In other words, the changes in weights received from the nodes 10B-D are combined with the weights of the instance of the neural network 40A running on the node 10A. For example, one or more corresponding, preferably normalized, average changes are calculated as a function of the weight changes received from the nodes 10B-D. Then, each calculated average change is added to the corresponding weight of the neural network 40A.

Subsequently, the method 3000 is reiterated by step 3001 to analyse new local changes of the local weights.

As will be apparent, the remaining nodes 10B-D perform the same synchronization method 3000 in parallel.

However, it is clear that the above examples must not be interpreted in a limiting sense and the invention thus conceived is susceptible of numerous modifications and variations.

For example, one or more steps of the above-described methods may be performed in parallel with each other or in an order different from the one presented above. Similarly, one or more optional steps can be added or removed from one or more of the procedures described above.

Similarly, a single, or a combination of two or more, of the methods presented above form an overall method for managing distributed artificial intelligence, in particular comprising a neural network, in a computer network. In addition, one or more steps of different methods can be performed in parallel with each other or in a different order from the one presented above.

Naturally, all the details can be replaced with other technically-equivalent elements. In particular, the contingent shapes and sizes of the aforementioned devices, apparatuses and terminals may be any according to the specific implementation requirements without going beyond the scope of protection of the following claims.

## Claims

1. Distributed computer network (1) comprising a plurality of network nodes (10; 10A-D) connected to each other to exchange data, each node executing a respective version of the same artificial intelligence model (40; 40A-D), wherein each network node:
acquires a set of input data;
determines at least one value of a relevant characteristic or, feature, as a function of the input data set;
generates a set of output data as a function of the input data by means of the artificial intelligence model, and
wherein the network node is adapted to selectively modify at least one weight of the artificial intelligence model as a function of the input data set and the output data set,
**characterized in that**
each network node:
checks whether the change of the at least one weight corresponds to a predetermined update condition,
in the affirmative case, generates an update message comprising at least one value indicative of an update to be applied to the at least one weight,
transmits the update message to the remaining nodes of the network, and
**in that**
each network node,
upon receiving an update message, modifies at least one weight of its version of the artificial intelligence model as a function of the indicative value of an update to be applied to the at least one weight included in each update message received, and
generates the output data set by processing the input data by means of the updated artificial intelligence model, so that the network nodes generate coherent output data sets in the entire distributed computer network.

2. Computer network (1) according to claim 1, wherein the artificial intelligence model (40; 40A-D) is a neural network (40; 40A-D).

3. Computer network (1) according to claim 2, wherein each node (10; 10A-D) updates a weight by calculating an activation value of neurons of the neural network (40; 40A-D): ${y}_{o} \left(t\right) = f \left(\sum {w}_{io} \left(t\right) ⋅ {x}_{i} \left(t\right)\right) ,$
where yₒ(t) is the activation value of an output neuron or, *xᵢ* is an input value of an i-th input neuron connected to the output neuron or *wᵢₒ* is the weight linking input and output neurons, and f(·) represents an activation function, preferably a ReLU or Sigmoid function, and
wherein each node (10; 10A-D) calculates an update value of a corresponding weight *wᵢₒ(t)* as: ${Δw}_{io} \left(t\right) = η ⋅ \left({x}_{i}\left(t\right)⋅{y}_{o}\left(t\right)-λ⋅{w}_{io}\left(t\right)\right) ,$
where *η* is a learning rate, *λ* is a decay rate of the neural network, and
wherein each update value is added to a corresponding weight of the neural network.

4. Computer network (1) according to claim 3, wherein the network mode (10; 10A-D) removes a link between two neurons of the neural network (40, 40A-40D) if the value of a respective updated weight is lower than a predetermined threshold value, and wherein a new link between two neurons of the neural network is added if the value of a new weight is higher than the predetermined threshold value.

5. Computer network (1) according to any one of the preceding claims, wherein each network node (10A-D) transmits to any other node of the computer network the updated value of at least one weight of the neural network (40A-D) calculated by the network node itself, and wherein each network node modifies at least a corresponding weight of the respective neural network based on a linear combination, preferably an average or a weighted average, of the weight values calculated by the neural network (40A-D) and received by the other nodes of the computer network.

6. Computer network (1) according to any one of the preceding claims 1-4, wherein each network node (10A-D) transmits to any other node of the computer network a difference value between a value of at least one weight and a corresponding updated value of the same weight of the neural network (40A-D) calculated by the network node itself, and
wherein each network node modifies at least a corresponding weight of the respective neural network based on a linear combination, preferably an average or a weighted average, of the difference values calculated by the neural network (40A-D) and received by the other nodes of the computer network.

7. Computer network (1) according to claim 5 or 6, wherein each network node (10; 10A-D) selects the at least one weight of which to transmit the updated value or the change value of a weight if the updated value or the change value of a weight exceeds a respective sharing threshold value.

8. Computer network (1) according to any one of the preceding claims from 1 to 5, wherein each network node (10A-D) is adapted to identify anomalies in the input data set, wherein the anomalies preferably comprise format/content different from an expected format/content, code or portions of malicious code, when the network node identifies an anomaly it signals the identification of the anomaly to the other network nodes,
if a predetermined number of nodes identifies the same anomaly, each network node that has identified the anomaly transmits to any other node of the computer network the value of at least one updated weight of the artificial intelligence model (40A-D) associated with the anomaly, and wherein each network node modifies at least one corresponding weight of the respective artificial intelligence model based on a linear combination, preferably an average or a weighted average, of the values of the at least one weight received by the nodes of the computer network that has detected the anomaly.

9. Computer network (1) according to any one of the preceding claims, wherein the input data set comprises one or more of:
unique identifiers (UIDs),
timestamps,
log,
data destination ports,
IP addresses,
protocols used,
bytes sent/received,
samples or copies of one or more exchanged data packets;
messages generated by any control software running on each node (10; 10A-D), and
values detected by sensors, transducers or detectors comprised on each node (10; 10A-D).

10. Distributed computer network (1) comprising a plurality of network nodes (10; 10A-D) connected to each other to exchange data, each node executing a respective version of a same artificial intelligence model (40; 40A-D) adapted to detect an anomaly in a network traffic of the distributed computer network, wherein each network node:
acquires a set of input data, wherein the set of input data comprises one or more of: unique identifiers (UIDs), timestamps, log, data destination ports, IP addresses, protocols used, bytes sent/received, samples or copies of one or more exchanged data packets; messages generated by any control software running on each node (10; 10A-D), values detected by sensors, transducers and/or detectors comprised on each node (10; 10A-D);
determines at least one value of a relevant characteristic or, feature, as a function of the input data set;
generates a set of output data as a function of the input data by means of the artificial intelligence model, the set of output data being indicative of the detection of an anomaly in a network traffic of the distributed computer network, and
wherein the network node is adapted to selectively modify at least one weight of the artificial intelligence model as a function of the input data set and the output data set,
**characterized in that**
each network node:
checks whether the change of the at least one weight corresponds to a predetermined update condition,
in the affirmative case, generates an update message comprising at least one value indicative of an update to be applied to the at least one weight,
transmits the update message to the remaining nodes of the network, and
**in that**
each network node,
upon receiving an update message, modifies at least one weight of its version of the artificial intelligence model as a function of the indicative value of an update to be applied to the at least one weight included in each update message received, and
generates the set of output data by processing the input data by means of the updated artificial intelligence model, so that the artificial intelligence model running on the network nodes are jointly updated to detect the anomaly identified in the entire distributed computer network.

11. Method (1000;2000;3000) of managing instances of artificial intelligence model (40; 40A-D) running on respective network nodes (10; 10A-D) of a distributed computer network (1), wherein the computer network comprises a plurality of network nodes connected to each other to exchange data, wherein the method comprises that each network node performs the steps of:
acquiring (1001) a set of input data;
determining (1002) at least one value of a relevant characteristic or, feature, as a function of the input data set;
generating (1008-1013) a set of output data as a function of the input data by means of the artificial intelligence model, and
selectively modifying (1005-1006) at least one weight of the artificial intelligence model as a function of the input data set and the output data set,
**characterised by**
comprising each network node performing the steps of:
checking (3001) whether the change of the at least one weight corresponds to a predetermined update condition,
in the affirmative case, generating (3002) an update message comprising at least one value indicative of an update to be applied to the at least one weight,
transmitting (3003) the update message to the remaining nodes of the network, and
by
comprising each network node performing the step of:
upon receiving an update message,
modifying (3005) at least one weight of its version of the artificial intelligence model as a function of the indicative value of an update to be applied to the at least one weight included in each update message received, and
wherein the step of generating (1008-1013) the output data set as a function of the input data processed by means of the artificial intelligence model is performed by the updated artificial intelligence model.
